# EUROPÄISCHE PATENTSCHRIFT

(11) **EP 0 527 107 B1**
(45) Veröffentlichungstag und Bekanntmachung des Hinweises auf die Patenterteilung: **13.08.1997**
(21) Anmeldenummer: 92810447.0
(22) Anmeldetag: 10.06.1992
(51) Int. Cl.: C08G 59/68, C08G 59/62, C08G 85/00

(54) **Neue Harzsysteme mit niedrigeren Formtemperaturen**
New resin system having a low moulding temperature
Nouveaux systèmes de résines ayant une basse température de moulage

(30) Priorität: 19.06.1991 CH 1811/91
(43) Veröffentlichungstag der Anmeldung: 10.02.1993
(73) Patentinhaber: Ciba Specialty Chemicals Holding Inc., 4057 Basel (CH)
(72) Erfinder: Munk, Kurt, Dr., W-7889 Grenzach (DE)

(56) Entgegenhaltungen:
- EP-A- 0 379 464
- US-A- 4 318 766

## Beschreibung

Die Erfindung betrifft neue Zusammensetzungen enthaltend ein Epoxydharz, ein aliphatisches Diol und ein spezifisches Sulfoniumsalz als Härtungskatalysator, sowie die Verwendung dieser Zusammensetzungen beispielsweise zum Verguss und zur Isolierung z.B. von elektrischen Leitern, elektronischen Bauteilen und anderen Geräten.

Aus der EP-A-0 379 464 sind thermisch härtbare Zusammensetzungen bekannt, die zumindest ein kationisch polymerisierbares organisches Material und ein Sulfoniumsalz der weiter unten genannten Formeln (I), (II), (III) oder (IV) enthalten. Die dort beschriebenen Zusammensetzungen, die unter anderem als Giess- und Imprägnierharze geeignet sind, dürfen keine Komponenten mit Aminogruppen enthalten, um die Härtung der Zusammensetzungen nicht zu stören.

In der Praxis werden gewöhnlich das kationisch polymerisierbare organische Material und der Härtungskatalysator, der in der Regel in Form einer Lösung oder Dispersion vorliegt, getrennt gelagert und erst kurz vor der Verarbeitung vermischt. Die im oben genannten Dokument beschriebenen Zusammensetzungen können nach der Vermischung zwar relativ lange Zeit verarbeitet werden, wenn der Härter noch frisch ist und nicht schon lange Zeit gelagert wurde, andernfalls ist die Zeitspanne, in der eine Verarbeitung möglich ist (Topfzeit), jedoch schon stark eingeschränkt. Ausserdem kann es nach dem Vermischen von Härter und polymerisierbarem Material zu einer vorzeitigen Erhöhung der Viskosität der Zusammensetzungen kommen, die so stark ist, dass z. B. ein Eindringen der Masse in feine Hohlräume eines behandelten Materials, wie es bei Verwendung der Zusammensetzungen als Giess- und Imprägnierharze oftmals nötig ist, nicht mehr möglich ist.
Um eine schnelle Gelierung und Härtung der konventionellen Systeme zu ermöglichen, müssen ausserdem oft relativ hohe Härtungs- und Gelierungstemperaturen angewendet werden.

Es wurde nun gefunden, dass sich die Gelierzeitdauer der eingangs genannten Zusammensetzungen mit Hilfe spezifischer Systeme bestehend aus einem Sulfoniumsalz und einem Diol sehr stark verkürzen lässt. Die in Frage kommenden letztgenannten Verbindungen werden gleichzeitig als Lösungsmittel eingesetzt und in das polymerisierbare organische Material eingebaut. Gleichzeitig kann die Gelierungstemperatur auch reduziert werden, und es resultieren gehärtete Produkte mit ausgezeichneten chemischen und mechanischen Eigenschaften.

Die Erfindung betrifft demnach härtbare Zusammensetzungen enthaltend
a) ein Epoxydharz,
b) mindestens ein aliphatisches Diol, und
c) als Härtungskatalysator mindestens ein Sulfoniumsalz der Formeln (I), (II), (III) oder (IV): 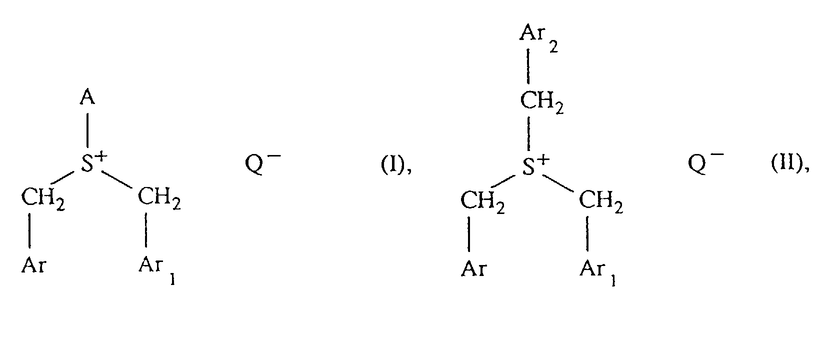 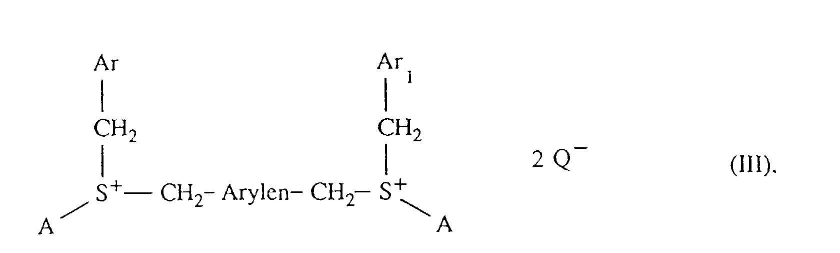 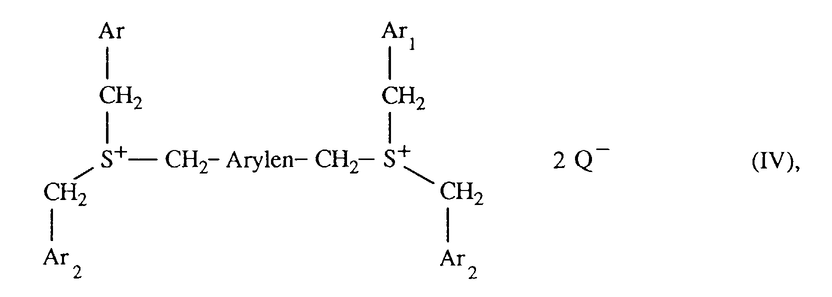
worin in den Formeln (I) bis (IV) A für ein C₁-C₁₂-Alkyl, C₃-C₈-Cycloalkyl, C₄-C₁₀-Cycloalkylalkyl, unsubstituiertes oder durch C₁-C₈-Alkyl, C₁-C₄-Alkoxy, Halogen, Nitro, Phenyl, Phenoxy, Alkoxycarbonyl mit 1-4 C-Atomen im Alkoxyrest oder Acyl mit 1-12 C-Atomen einfach oder mehrfach substituiertes Phenyl steht, Ar, Ar₁ und Ar₂ unabhängig voneinander je ein unsubstituiertes oder durch C₁-C₈-Alkyl, C₁-C₄-Alkoxy, Halogen, Nitro, Phenyl, Phenoxy, Alkoxycarbonyl mit 1-4 C-Atomen im Alkoxyrest oder Acyl mit 1-12 C-Atomen einfach oder mehrfach substituiertes Phenyl oder Naphthyl bedeuten, Arylen je ein unsubstituiertes oder durch C₁-C₈-Alkyl, C₁-C₄-Alkoxy, Halogen, Nitro, Phenyl, Phenoxy, Alkoxycarbonyl mit 1-4 C-Atomen im Alkoxyrest oder Acyl mit 1-12 C-Atomen einfach oder mehrfach substituiertes Phenylen oder Naphthylen bedeutet und Q⁻ für SbF₆⁻, AsF₆⁻ oder SbF₅OH⁻ steht.

Besonders wichtige Epoxidharze sind die di- oder polyfunktionellen Epoxide, oder Epoxidharzpräpolymere der zur Herstellung vernetzter Epoxiharze verwendeten Art. Die Di- oder Polyepoxide können aliphatische, cycloaliphatische oder aromatische Verbindungen sein. Beispiele für solche Verbindungen sind die Glycidylether und β-Methylglycidylether aliphatischer oder cycloaliphatischer Diole oder Polyole, zum Beispiel solche des Ethylenglykols, Propan-1,2-diols, Propan-1,3-diols, Butan-1,4-diols, Diethylenglykols, Polyethylenglykols, Polypropylenglykols, Glycerins, Trimethylolpropans oder 1,4-Dimethylolcyclohexans oder des 2,2-Bis-(4-hydroxycyclohexyl)-propans, die Glycidylether von Di- und Polyphenolen, beispielsweise Resorcin, 4,4'-Dihydroxydiphenylmethan, 4,4'-Dihydroxydiphenyl-2,2-propan, Novolake und 1,1,2,2-Tetrakis-(4-hydroxyphenyl)-ethan. Weitere Beispiele sind N-Glycidylverbindungen, z.B. die Diglycidylverbindungen des Ethylenharnstoffs, 1,3-Propylenharnstoffs oder 5-Dimethylhydantoins oder des 4,4'-Methylen-5,5'-tetramethyldihydantoins, oder solche wie Triglycidylisocyanurat.

Weitere Glycidylverbindungen mit technischer Bedeutung sind die Glycidylester von Carbonsäuren, insbesondere Di- und Polycarbonsäuren. Beispiele dafür sind die Glycidylester der Bernsteinsäure, Adipinsäure, Azelainsäure, Sebacinsäure, Phthalsäure, Terephthalsäure, Tetra- und Hexahydrophthalsäure, Isophthalsäure oder Trimellitsäure, oder von dimerisierten Fettsäuren.

Beispiele für von Glycidylverbindungen verschiedene Polyepoxide sind die Diepoxide des Vinylcyclohexens und Dicyclopentadiens, 3-(3',4'-Epoxicyclohexyl)-8,9-epoxy-2,4-dioxaspiro[5.5]undecan, der 3',4'-Epoxicyclohexylmethylester der 3,4-Epoxicyclohexancarbonsäure, Butadiendiepoxid oder Isoprendiepoxid, epoxidierte Linolsäurederivate oder epoxidiertes Polybutadien.

Bevorzugte Epoxidharze sind gegebenenfalls vorverlängerte Diglycidylether zweiwertiger Phenole oder zweiwertiger aliphatischer Alkohole mit 2 bis 4 Kohlenstoffatomen. Bevorzugt sind die Epoxidharze unterhalb der Temperatur, bei der die Härtung einsetzt, fliessfähig.
Ganz besonders bevorzugt werden die gegebenenfalls vorverlängerten Diglycidylether des 2,2-Bis-(4-hydroxyphenyl)-propans oder des Bis-(4-hydroxyphenyl)-methans oder ein Gemisch aus diesen Epoxidharzen.

Beispiele für erfindungsjemäss in Frage kommende aliphatische Diole sind Ethylenglykol, Propan-1,2- oder -1,3-diol, Butan-1,2-, -1,3- , -1,4- oder -2,3-diol, Pentan-1,5-diol, Hexan-1,6-diol, 2,2-Dimethyl-1,3-propandiol, 2-Ethyl-2-butylpropan-1,2-diol, 1,2-Tetradecandiol, 1,2-Hexadecandiol, 1,12-Dihydroxyoctadecan, beta-Hydroxyethylether von Dialkoholen, wie Diethylenglycol, Triethylenglycol, Polyethylenglycole, Polypropylenglycole oder Kondensate von Alkylenoxyden, wie Ethylen-, Propylen-, Butylen- oder Isobutylenoxid, mit den oben genannten Dialkoholen, ferner Hydroxyester, wie z.B Monoglyceride, wie Monostearin. Erfindungsgemäss bevorzugt sind Ethylenglycol und Propylenglycol. Auch bevorzugt sind Polyethylenglycole und Polypropylenglycole.

Die Menge der Komponente b) kann je nach verwendetem Diol beliebig variieren, sie beträgt im allgemeinen 0,5 bis 40 Gew.%, bezogen auf das polymerisierbare organische Material (Komponente a), bevorzugt aber 2 bis 15 Gew.%.

Die Härtungskatalysatoren (Komponente c) der Formeln (1) bis (IV) sind in der EP-A-0 379 464 beschrieben, deren Beschreibung einen Bestandteil der vorliegenden Beschreibung bildet.
Die Erläuterungen, die in diesem EP-A-Dokument zu den verschiedenen Resten der Formeln (1) bis (IV) gegeben sind, gelten auch für die vorliegende Erfindung.

Besonders bevorzugt sind erfindungsgemässe Zusammensetzungen, die als Komponente c) einen Härtungskatalysator der Formel (I) oder (II) enthalten, worin A ein C₁-C₁₂-Alkyl oder ein unsubstituiertes oder durch Halogen oder C₁-C₄-Alkyl substituiertes Phenyl bedeutet, Ar, Ar₁ und Ar₂ unabhängig voneinander je ein unsubtituiertes oder durch C₁-C₈-Alkyl, C₁-C₄-Alkoxy, Chlor oder Brom einfach oder mehrfach substituiertes Phenyl bedeuten und Q⁻ für SbF₅OH⁻ oder insbesondere für AsF₆⁻ oder SbF₆⁻ steht. Ar, Ar₁ und Ar₂ bedeuten bevorzugt Phenyl. Ganz besonders bevorzugt sind Dibenzylphenylsulfoniumsalze.

Die Menge an Härtungskatalysator (Komponente c) beträgt im allgemeinen 0,05 bis 20 Gew.-%, bezogen auf das kationisch polymerisierbare organische Material, bevorzugt 0,1 bis 5 Gew.-%.

Ausserdem können die erfindungsgemässen Zusammensetzungen noch weitere mit dem verwendeten kationisch polymerisierbaren organischen Material copolymerisierbare Verbindungen, wie beispielsweise cyclische Ether oder cyclische Lactone, als Reaktionslösungsmittel enthalten. Solche Reaktionslösungsmittel sind beispielsweise Propylencarbonat, ε-Caprolacton, γ-Butyrolacton oder Tetrahydrofurfurylalkohol. Auch diese copolymerisierbaren Verbindungen müssen frei von die kationische Härtung störenden oder inhibierenden Gruppen sein. Im Falle der Verwendung von copolymerisierbaren Verbindungen beträgt deren Anteil im allgemeinen zwischen 1 bis 50 Gew.%, bezogen auf die Menge an verwendetem kationisch polymerisierbarem organischem Material, und die Menge des Härtungskatalysators im allgemeinen 0,05 bis 20 Gew.-%, bezogen auf die Menge an verwendetem kationisch polymerisierbarem organischem Material und die Menge der copolymerisierbaren Verbindung.

Die Zusammensetzungen können auch noch weitere, bekannte und üblicherweise in der Technik polymerisierbarer Materialien eingesetzte Zusatzstoffe enthalten. Beispiele für solche Zusatzstoffe sind Pigmente, Farbstoffe, Füllstoffe, wie Kreide, Talkum, Kaolin, Glimmer, Gips, Titandioxid, Quarzmehl, Aluminiumoxid, Cellulose, Tonerde, gemahlener Dolomit, Wollastonit, Kieselerde mit grosser spezifischer Oberfläche (Areosil®), mit langkettigen Aminen modifizierte Tonerde (Bentone®), gepulvertes Polyvinylchlorid, Polyolefine oder Aminoplaste, sowie Metallpulver, wie Kupfer-, Silber-, Aluminium- oder Eisenpulver, Verstärkungsmittel, Glasfasern und sonstige Fasern, Flammhemmstoffe, wie Antimontrioxid, und Antistatika, Verlaufmittel, Antioxydantien und Lichtschutzmittel.

Die erfindungsgemässen Zusammensetzungen lassen sich prinzipiell in beliebiger Form erhalten, z.B. als homogene flüssige Gemische oder in homogener oder inhomogener glasiger Form. Homogene glasige Produkte können in an sich bekannter Weise zum Beispiel durch Verflüssigung fester Epoxydharze, gegebenenfalls unter Zusatz geeigneter Lösungsmittel, Erhitzen auf Temperaturen über ihren Glasumwandlungspunkt, Zugabe des Härtungsmittels und Abkühlung der entstandenen Gemische erhalten werden.

Die erfindungsgemässen Zusammensetzungen lassen sich ganz allgemein zur Herstellung von gehärteten Produkten einsetzen, und können in der dem jeweils speziellen Anwendungsgebiet angepassten Formulierung, beispielsweise als Giessharze und Imprägnierharze zur Umhüllung oder Imprägnierung von Gegenständen, eingesetzt werden.

Ihre Verwendung als Giess- und Imprägnierharze, insbesondere für elektrische Hoch- und Niederspannungsbauteile sowie für elektronische Bauteile, bildet einen Gegenstand der Erfindung.

Die erfindungsgemässen Gemische können bei relativ niedrigen Temperaturen rasch ausgehärtet werden. Im allgemeinen wendet man zur Aushärtung Temperaturen im Bereich von 20 bis 200°C, vorzugsweise von 60 bis 180°C, insbesondere 80 bis 150°C, an. Man kann an den erfindungsgemässen Gemischen auch erst eine Vorhärtung bei tieferen Temperaturen bis zum Gelieren der härtbaren Zusammensetzung durchführen, an die sich dann eine Aushärtung bei höheren Temperaturen anschliesst.

Die Aushärtung erfolgt in der Regel unter gleichzeitiger Formgebung zu Formkörpern, oder Imprägnierungen.

Wie bereits oben erwähnt, führt die Verwendung von Diolen in den erfindungsgemäss in Frage kommenden Harzsysteme überraschenderweise zu einer deutlichen Erhöhung der Reaktivität beim Härtungsprozess und gleichzeitig zu einer Erniedrigung der Härtungstemperatur. Ausserdem erlauben die erfindungsgemässen Zusammensetzungen bei ihrer Verarbeitung schnelle Entformungszyklen bei tiefen Temperaturen und damit eine geringere Bildung von flüchtigen unerwünschten Dämpfen. Man erzielt damit eine hygienisch günstige Verarbeitung. Im Vergleich zu konventionellen Systemen, die z.B. Dibuthylphthalat als nicht reaktives Lösungsmittel enthalten, werden erfindungsgemäss Hydroxylgruppen enthaltende Verbindungen eingesetzt, welche sowohl als Lösungsmittel wirken als auch in das Epoxydharz eingebaut werden können. Es wird angenommen. dass derartige Verbindungen (Komponenten b) mit den Sulfoniumsalzen (Komponente c) Komplexe Illit einer tieferen Aktivierungsenergie bilden und daher tiefere Härtungstemperaturen ermöglichen.

Mit den erfindungsgemässen Zusammensetzungen lassen sich feste, unlösliche und unschmelzbare, dreidimensional vernetzte Produkte erhalten, die sich durch gute allgemeine Eigenschaften auszeichnen, wie z.B. eine hohe Temperaturbeständigkeit,

### Beispiel 1: Zu einer Vormischung aus 90 Gew.-Teilen eines

Bis-Phenol-A-diglycidyletherharzes (durchschnittliches Molekulargewicht 340, Epoxidgehalt 5,2 Aequivalente/kg, Viskosität 10800 mPas) und 167 Gew.-Teilen Quarzmehl (16900 Maschen) werden 10,2 Gew.-Teile einer Katalysatorlösung bestehend aus 0,2 Gew.-Teilen Dibenzylphenylsulfonium-hexafluorantimonat und 10 Gew.-Teilen Polypropylenglykol (Molekulargewicht 425) zugegeben, und das erhaltene Gemisch wird homogenisiert. Die Gebrauchsdauer dieses reaktiven Systems beträgt bei 40°C ca. 10 Stunden (Verdoppelung der Ausgangsviskosität von 23000 mPas auf 46000 mPas).

### Verarbeitungseigenschaften des Systems nach Beispiel 1

Die Giessharzmasse, hergestellt nach dem oben genannten Beispiel, wird in eine vorgewärmte Stahlform gegossen und im Härtungshofen bei verschiedenen Temperaturen polymerisiert. Folgende Gelierzeitdauer und Entformungszeiten bei einer Giessmenge von jeweils 1,5 kg werden erhalten:

| Formtemperatur | Härtungstemperatur | Gelierzeit (in Min.) Bsp.1 | Entformung nach (in Min.) Bsp.1 |
|---|---|---|---|
| 70°C | 70°C | 3 | 13 |
| 80°C | 80°C | 1 | 8 |
| 100°C | 100°C | 0,5 | 5 |

### Eigenschaften des Systems in Beispiel 1 nach Härtung (6 Stunden bei 130°C)

| | | Bsp.1 |
|---|---|---|
| Glasumwandlungstemperatur °C | Mettler TA 4000 | 115 |
| Martenstemperatur | °C DIN 53458 | 107 |
| E-Modulus | N/mm² ISO R 178 | 11600 |
| Zugfestigkeit | N/mm² ISO R 178 | 85 |
| Bruchdehnung | % ISO R 178 | 1,1 |
| Schlagzähigkeit | J/m² ISO R 179 | 8,6 |
| Elektr. Verlustfaktor | %./100 | |
| bei 23°C | | 0,54 |
| bei 50°C | | 0,85 |
| bei 100°C | | 2,1 |
| bei 130°C | | 5,6 |
| bei 150°C | | 12,6 |

## Patentansprüche

1. Härtbare Zusammensetzungen zur Verwendung als Giessharze und Imprägnierharze enthaltend
a) ein Epoxydharz,
b) mindestens ein aliphatisches Diol, und
c) als Härtungskatalysator mindestens ein Sulfoniumsalz der Formeln (1), (11), (III) oder (IV): 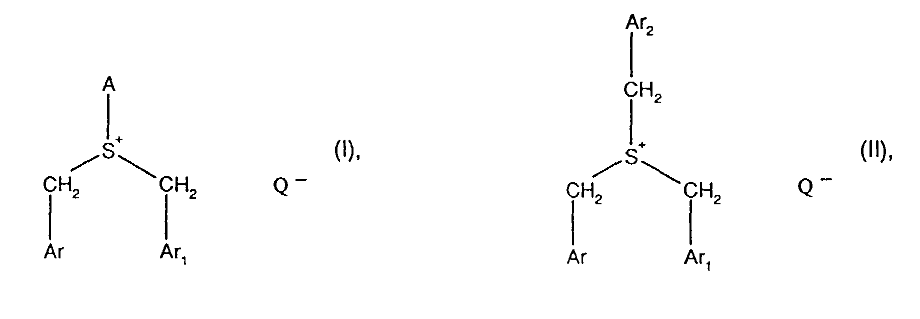 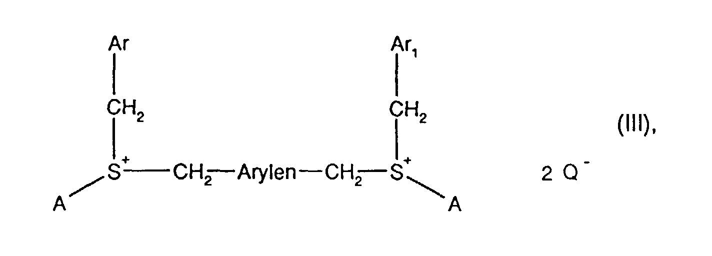 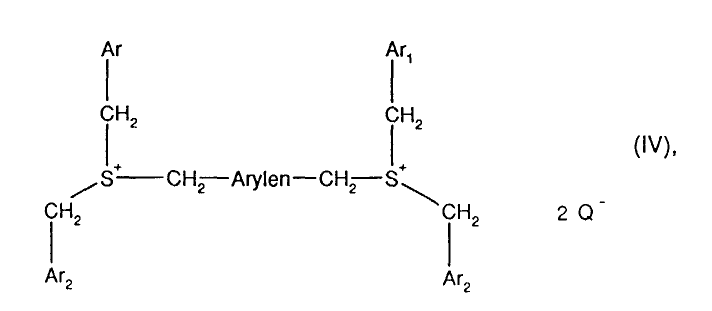
worin in den Formeln (I), (II), (III) oder (IV) A für ein C₁-C₁₂-Alkyl, C₃-C₈-Cycloalkyl, C₄-C₁₀-Cycloalkylalkyl, unsubstituiertes oder durch C₁-C₈-Alkyl, C₁-C₄-Alkoxy, Halogen, Nitro, Phenyl, Phenoxy, Alkoxycarbonyl mit 1-4 C-Atomen im Alkoxyrest oder Acyl mit 1-12 C-Atomen einfach oder mehrfach substituiertes Phenyl steht, Ar, Ar₁ und Ar₂ unabhängig voneinander je ein unsubstituiertes oder durch C₁-C₈-Alkyl, C₁-C₄-Alkoxy, Halogen, Nitro, Phenyl, Phenoxy, Alkoxycarbonyl mit 1-4 C-Atomen im Alkoxyrest oder Acyl mit 1-12 C-Atomen einfach oder mehrfach substituiertes Phenyl oder Naphthyl bedeuten, Arylen je ein unsubstituiertes oder durch C₁-C₈-Alkyl, C₁-C₄-Alkoxy, Halogen, Nitro, Phenyl, Phenoxy, Alkoxycarbonyl mit 1-4 C-Atomen im Alkoxyrest oder Acyl mit 1-12 C-Atomen einfach oder mehrfach substituiertes Phenylen oder Naphthylen bedeutet und Q⁻ für SbF₆⁻, AsF₆⁻ oder SbF₅OH⁻ steht,
wobei die Menge der Komponente b) 0,5 bis 40 Gew.-%, bezogen auf die Komponente a), und die Menge der Komponente c) 0,05 bis 20 Gew.-%, bezogen auf die Komponente a), betragen.

2. Zusammensetzungen nach Anspruch 1, die als Epoxidharz ein di- oder polyfunktionelles Epoxidharz, oder ein Epoxidharzpräpolymer der zur Herstellung vernetzter Epoxidharze verwendeten Art enthalten.

3. Zusammensetzungen nach Anspruch 1, die als Epoxidharz einen gegebenenfalls vorverlängerten Diglycidylether des 2,2-Bis(4-hydroxyphenyl)propans oder des Bis-(4-hydroxyphenyl)-methans oder ein Gemisch aus diesen Epoxidharzen enthalten.

4. Zusammensetzungen nach Anspruch 1, die als aliphatisches Diol Ethylenglycol oder Propylenglycol enthalten.

5. Zusammensetzungen nach Anspruch 1, die als Komponente c) einen Härtungskatalysator der Formel (I) oder (II) enthalten, worin A ein C₁-C₁₂-Alkyl oder ein unsubstituiertes oder durch Halogen oder C₁-C₄-Alkyl substituiertes Phenyl bedeutet, Ar, Ar₁ und Ar₂ unabhängig voneinander je ein unsubtituiertes oder durch C₁-C₈-Alkyl, C₁-C₄-Alkoxy, Cl oder Br einfach oder mehrfach substituiertes Phenyl bedeuten und Q- für SbF₅OH⁻ oder insbesondere für AsF₆⁻ oder SbF₆⁻ steht.

6. Zusammensetzungen nach Anspruch 1, bei der die Komponente b) in einer Menge von 2 bis 15 Gew.%, bezogen auf die Komponente a), vorhanden ist.

7. Verwendung der härtbaren Zusammensetzungen gemäss Anspruch 1 als Giesharze und Imprägnierharze.

## Claims

1. A curable composition for use as casting resin or impregnating resin, comprising
a) an epoxy resin,
b) at least one aliphatic diol, and
c) at least one sulfonium salt of formula (I), (II), (III) or (IV) as curing catalyst: 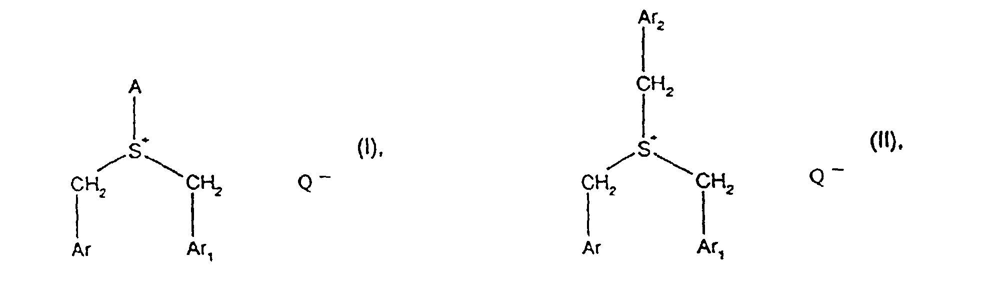 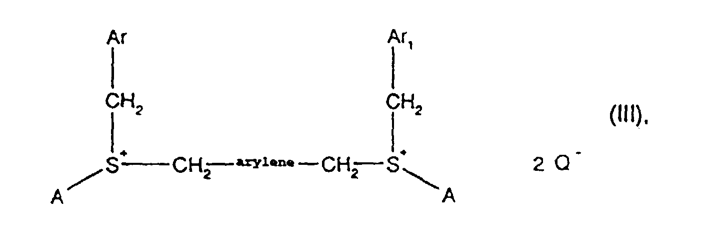 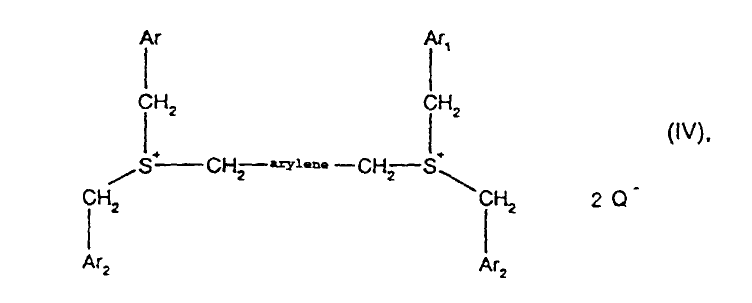 in which formula (I), (II), (III) or (IV, A is C₁-C₁₂alkyl, C₃-C₈cycloalkyl, C₄-C₁₀cycloalkylalkyl, unsubstituted phenyl or phenyl which is substituted one or more times by C₁-C₈alkyl, C₁-C₄alkoxy, halogen, nitro, phenyl, phenoxy, alkoxycarbonyl containing 1 to 4 carbon atoms in the alkoxy moiety or acyl of 1 to 12 carbon atoms, Ar, Ar₁ and Ar₂ are each independently of one another unsubstituted phenyl or naphthyl or phenyl or naphthyl which are each substituted one or more times by C₁-C₈alkyl, C₁-C₄alkoxy, halogen, nitro, phenyl, phenoxy, alkoxycarbonyl containing 1 to 4 carbon atoms in the alkoxy moiety or acyl of 1 to 12 carbon atoms, each arylene is unsubstituted phenylene or naphthylene or phenylene or naphthylene which are each substituted one or more times by C₁-C₈alkyl, C₁-C₄alkoxy, halogen, nitro, phenyl, phenoxy, alkoxycarbonyl containing 1 to 4 carbon atoms in the alkoxy moiety or acyl of 1 to 12 carbon atoms, and Q⁻ is SbF₆⁻, AsF₆⁻ or SbF₅OH⁻, where the amount of component b) is 0.5 to 40% by weight, based on component a), and the amount of component c) is 0.05 to 20% by weight, based on component a).

2. A composition according to claim 1, wherein the epoxy resin is a bifunctional or polyfunctional epoxy resin or an epoxy resin prepolymer of the type used to prepare crosslinked epoxy resins.

3. A composition according to claim 1, wherein the epoxy resin is a diglycidyl ether or advanced diglycidyl ether of 2,2-bis(4-hydroxyphenyl)propane or of bis(4-hydroxyphenyl)methane or a mixture of these epoxy resins.

4. A composition according to claim 1, wherein the aliphatic diol is ethylene glycol or propyene glycol.

5. A composition according to claim 1, wherein component c) is a curing catalyst of formula (I) or (II) in which A is C₁-C₁₂alkyl or unsubstituted phenyl or phenyl which is substituted by halogen or C₁-C₄alkyl, Ar, Ar₁ and Ar₂ are each independently of one another unsubstituted phenyl or phenyl which is substituted one or more times by C₁-C₈alkyl, C₁-C₄alkoxy, Cl or Br and Q⁻ is SbF₅OH⁻ or, in particular, AsF₆⁻ or SbF₆⁻.

6. A composition according to claim 1, in which component b) is present in an amount of 2 to 15% by weight, based on component a).

7. Use of a curable composition according to claim 1 as a casting resin or impregnating resin.

## Revendications

1. Compositions durcissables pour utilisation en tant que résines à couler et résines d'imprégnation, contenant :
a) une résine époxyde,
b) au moins un diol aliphatique, et
c) en tant que catalyseur de durcissement, au moins un sel de sulfonium répondant aux formules (I), (II), (III) ou (IV) : 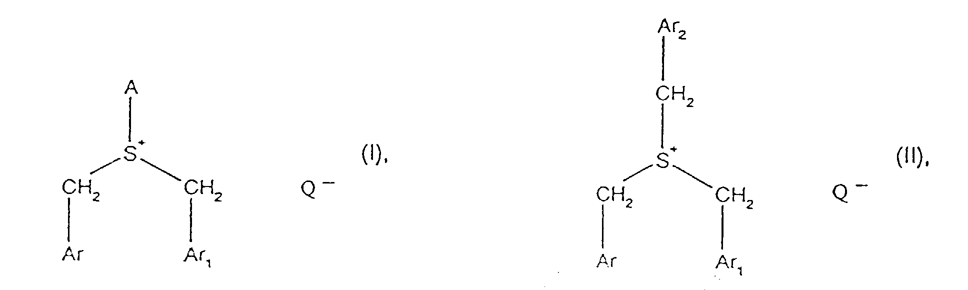 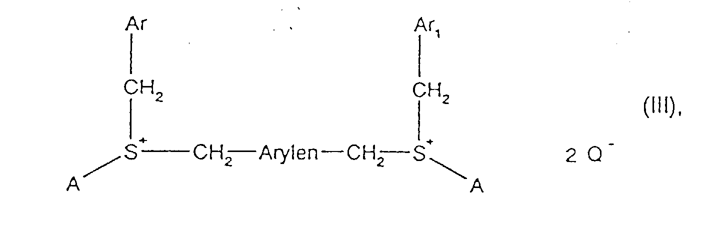 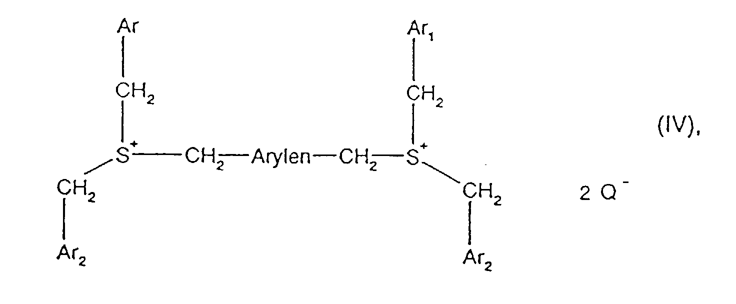
où, dans les formules (I), (II), (III) et (IV), A est un groupe alkyle en C₁-C₁₂, cycloalkyle en C₃-C₈, cycloalkylalkyle en C₄-C₁₀, un groupe phényle non substitué ou une ou plusieurs fois substitué par des substituants alkyle en C₁-C₈, alcoxy en C₁-C₄, halogéno, nitro, phényle, phénoxy, alcoxycarbonyle ayant de 1 à 4 atomes de carbone dans le fragment alcoxy ou acyle ayant de 1 à 12 atomes de carbone, Ar, Ar₁ et Ar₂ représentent chacun indépendamment des autres un groupe phényle ou naphtyle non substitué ou une ou plusieurs fois substitué par des substituants alkyle en C₁-C₈, alcoxy en C₁-C₄, halogéno, nitro, phényle, phénoxy, alcoxycarbonyle ayant de 1 à 4 atomes de carbone dans le fragment alcoxy ou acyle ayant de 1 à 12 atomes de carbone, les radicaux arylène représentent chacun un groupe phénylène ou naphtylène non substitué, ou une ou plusieurs fois substitué par des substituants alkyle en C₁-C₈, alcoxy en C₁-C₄, halogéno, nitro, phényle, phénoxy, alcoxy-carbonyle ayant de 1 à 4 atomes de carbone dans le fragment alcoxy, ou acyle ayant de 1 à 12 atomes de carbone et Q⁻ est SbF₆⁻, AsF₆⁻ ou SbF₅OH⁻,
où la quantité du constituant b) est de 0,5 à 40 % en poids par rapport au constituant a), et la quantité du constituant c) est de 0,05 à 20 % en poids par rapport au constituant a).

2. Compositions selon la revendication 1, qui contiennent en tant que résine époxyde une résine époxyde bi- ou polyfonctionnelle, ou un prépolymère de résine époxyde utilisé pour préparer des résines époxydes réticulées.

3. Compositions selon la revendication 1, qui contiennent en tant que résine époxyde un éther biglydicylique, éventuellement pré-allongé, du 2,2-bis(4-hydroxy-phényl)propane ou du bis(4-hydroxyphényl)méthane, ou un mélange de ces résines époxydes.

4. Compositions selon la revendication 1, qui contiennent en tant que diol aliphatique de l'éthylèneglycol ou du propylèneglycol.

5. Compositions selon la revendication 1, qui contiennent en tant que constituant c) un catalyseur de durcissement de formule (I) ou (II) où A est un groupe alkyle en C₁-C₁₂, ou un groupe phényle non substitué ou substitué par des substituants halogéno ou alkyle en C₁-C₄ ; Ar, Ar₁ et Ar₂ sont chacun indépendamment des autres un groupe phényle non substitué, ou une ou plusieurs fois substitué par des substituants alkyle en C₁-C₈, alcoxy en C₁-C₄, Cl ou Br ; et Q⁻ est SbF₅OH⁻ ou en particulier AsF₆⁻ ou SbF₆⁻.

6. Compositions selon la revendication 1, dans lesquelles le constituant b) est présent en une quantité de 2 à 15 % en poids par rapport au constituant a).

7. Utilisation des compositions durcissables selon la revendication 1 en tant que résines à couler et résines d'imprégnation.
